# EUROPÄISCHE PATENTANMELDUNG

(11) **EP 0 567 890 A2**
(43) Veröffentlichungstag der Anmeldung: **03.11.1993**
(21) Anmeldenummer: 93106336.6
(22) Anmeldetag: 20.04.1993
(51) Int. Cl.: H04B 7/26, H04B 7/06

(54) **Vorrichtung eines Fahrzeugs zur Datenübertragung auf eine ortsfeste Bake und damit gebildetes Kommunikationssystem**

(30) Priorität: 28.04.1992 DE 4213882
(71) Anmelder: ROBERT BOSCH GMBH, 70442 Stuttgart (DE)
(72) Erfinder: Rossius , Hans-Ulrich, Dipl.-Ing., W-3204 Nordstemmen 4 (DE); Bode,Friedrich-Wilhelm, Dipl.-Ing., W-3054 Apelern (DE); Vahle, Andreas, W-3200 Hildesheim (DE); Fischer, Hans-Jürgen, Dr. Dipl.-Ing., W-3200 Hildesheim (DE)

(57) **Zusammenfassung**

Eine Vorrichtung eines Fahrzeugs zur Datenübertragung auf eine ortsfeste Bake (1), die eine Sende- und Empfangsvorrichtung aufweist, bestehend aus einem Bordgerät (2) mit einer Antenne (6) zum Empfang eines von der Bake (1) ausgesandten kontinuierlichen Signals (5) und zum Zurücksenden des empfangenen Signals (5) nach einer Modulation mit einem Datensignal (i(t)), ist dadurch gekennzeichnet, daß das vom Bordgerät (2) zurückgesandte Signal (7) ein Zweiseitenbandsignal ist. Ind diesem Fall läßt sich das Bordgerät (2) extrem einfach ausbilden und besteht im einfachsten Fall aus einer in den Fußpunkt der Antenne (6) geschalteten Diode (9).

## Beschreibung

Die Erfindung betrifft eine Vorrichtung eines Fahrzeugs zur Datenübertragung auf eine ortsfeste Bake, die eine Sende- und Empfangseinrichtung aufweist, bestehend aus einem Bordgerät mit einer Antenne zum Empfang eines von der Bake ausgesandten kontinuierlichen Signals und zum Zurücksenden des empfangenen Signals nach einer Modulation mit einem Datensignal. Die Erfindung betrifft ferner ein mit einer derartigen Vorrichtung gebildetes Kommunikationssystem.

Insbesondere für die Verkehrsleittechnik ist ein System vorgesehen, bei dem eine Datenübertragung von einem an einer ortsfesten Bake vorbeifahrenden Fahrzeug zu dieser Bake hin erfolgt. Da es nicht sinnvoll ist, die Fahrzeuge selbst mit einem Sender auszustatten, ist es vorgesehen, Trägersignale von der Bake kontinuierlich aussenden zu lassen, die von dem vorüberfahrenden Fahrzeug empfangen und mit einem Datensignal moduliert werden. Die dafür in Frage kommenden Trägerfrequenzen liegen im Mikrowellenbereich (z. B. 5,8 GHz). Das Trägersignal wird von der Antenne des vorüberfahrenden Fahrzeugs empfangen und mit einem im Fahrzeug bereitgestellten Datensignal moduliert.

Dabei ist es bekannt, die Modulation am Fußpunkt der Antenne mit für die beiden logischen Zustände des Datensignals vorgesehenen verschiedenen Frequenzen vorzunehmen und das Trägersignal moduliert von der Antenne zu reflektieren, so daß im Fahrzeug keine eigene Sendeleistung bereitgestellt werden muß. Die dabei verwendeten Modulationsverfahren sind regelmäßig Frequenzkodierungen, durch die die Trägerfrequenz in Abhängigkeit von logisch "1" um eine andere Frequenz verschoben wird als in Abhängigkeit von logisch "0" ("frequency shift keying"). Um die Bordgeräte als Massengeräte mit möglichst geringem Aufwand erstellen zu können, ist versucht worden, entsprechende Kodierer möglichst simpel aufzubauen.

Ausgehend von der Problemstellung, die das Zurücksenden des von der Bake ausgesandten Signals in modulierter Form mit einem möglichst einfachen Bordgerät realisierbar zu machen, ist die erfindungsgemäße Vorrichtung dadurch gekennzeichnet, daß das vom Bordgerät zurückgesandte Signal ein Zweiseitenbandsignal ist.

Bei dem erfindungsgemäß verwendeten Zweiseitenbandsignal ist die Dateninformation in beiden Seitenbändern enthalten. Gegenüber dem reinen "frequency shift keying" (FSK) entsteht daher der Nachteil einer größeren benutzten Bandbreite sowie einer geringeren Reflektionsleistung pro Seitenband. Die Erfindung beruht auf der Erkenntnis, daß diese Nachteile in Kauf genommen werden können, wenn in der Bake ein erhöhter Geräteaufwand getrieben wird. Der durch die Erfindung erzielbare Vorteil besteht darin, daß das Bordgerät außerordentlich einfach aufgebaut sein kann und im Extremfall aus einer einzigen, an den Fußpunkt der Antenne angeschlossenen Diode besteht, die durch modulierende Impulssignale zwischen dem sperrenden und dem durchgeschalteten Zustand hin- und hergeschaltet wird. Die Erhöhung des Aufwandes in der ortsfesten Bake fällt demgegenüber nicht wesentlich ins Gewicht, weil es sich dabei um eine Einmalinvestition handelt, während die Bordgeräte in die Fahrzeuge eingebaute Massenprodukte sind.

Zur Erhöhung der Übertragungssicherheit für die Daten können im Bordgerät zwei räumlich voneinander getrennte Antennen vorgesehen sein, die die Zweiseitenbandsignale zurücksenden. Dadurch können viele lokale Störeinflüsse unwirksam gemacht werden.

Die Erfindung wird im folgenden anhand eines in der Zeichnung dargestellten Ausführungsbeispiels näher erläutert. Es zeigen:
- Figur 1 -: eine schematische Darstellung des Aufbaus eines Bordgeräts und einer Bake
- Figur 2 -: Frequenzdiagramme für die Zustände logisch "0" und logisch "1".

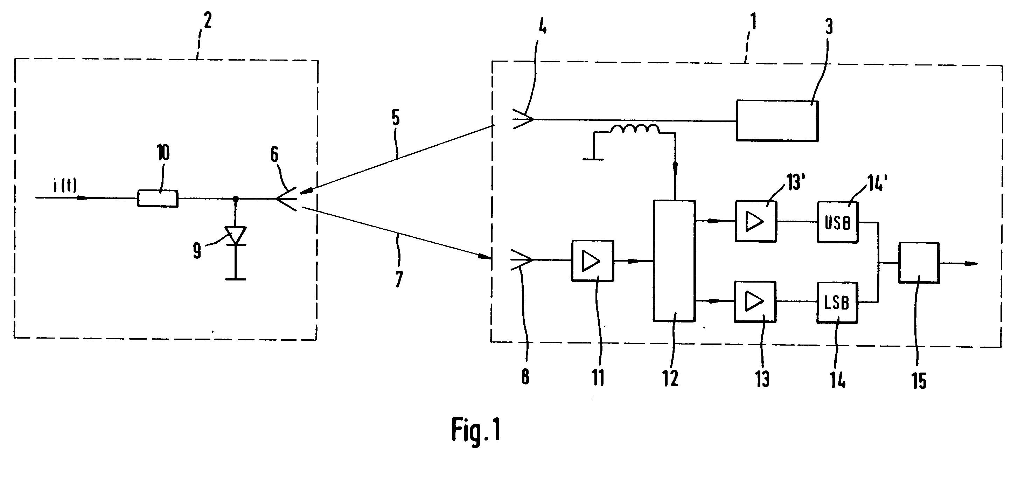

Figur 1 zeigt ein Blockschaltbild für die Sende- und Empfangsvorrichtung in einer Bake 1 sowie die Schaltungsanordnung in einem Bordgerät 2 eines Fahrzeugs.

In der Bake befindet sich ein Sender 3, von dessen Antenne 4 ein Trägerfrequenzsignal 5 kontinuierlich abgestrahlt wird.

Trifft das Trägerfrequenzsignal 5 auf eine Antenne 6 eines Bordgeräts 2 eines vorbeifahrenden Fahrzeugs, wird es in modulierter Form reflektiert und gelangt als reflektiertes Signal 7 auf eine Empfangsantenne 8 der Bake.

An den Fußpunkt der Antenne 6 des Bordgeräts 2 ist lediglich eine Diode 9 gegen Masse angeschlossen. Über einen Widerstand 10 wird ein Modulationssignal i(t) auf den Verbindungspunkt zwischen Diode 9 und Antenne 6 gekoppelt. Das Modulationssignal i(t) steuert mit einer Frequenz von einigen MHz die Diode 9 in den durchgeschalteten bzw. sperrenden Zustand und verändert somit den Fußpunktwiderstand der Antenne 6. Die Diode 9 wirkt somit als vom Modulationssignal i(t) gesteuerte Impedanz. Das hochfrequente Trägerfrequenzsignal wird somit mit einer relativ niedrigen Frequenz (im MHz-Bereich) dadurch moduliert, daß in einem Zustand der Diode 9 praktisch keine Reflexion von der Antenne 6 zur Empfangsantenne 8 stattfindet, während im anderen Zustand der Diode 9 das einfallende Signal 5 möglichst vollständig reflektiert wird. Daß von der Empfangsantenne 8 der Bake empfangene reflektierte Signal 7 wird in einem Empfängerverstärker 11 verstärkt und mit Hilfe eines Image Rejection Mixers 12 in die beiden Seitenbänder aufgeteilt. Die beiden Seitenbänder stehen an verschiedenen Ausgängen des Image Rejection Mixers 12 an und werden separat mit jeweils einem Verstärker 13, 13' und einem Demodulator 14, 14' verarbeitet. Die Ausgänge der beiden Demodulatoren 14, 14' sind zusammengeschaltet mit einem Eingang einer Kombinationsstufe 15 verbunden, deren Ausgang das übertragene Datensignal ansteht.

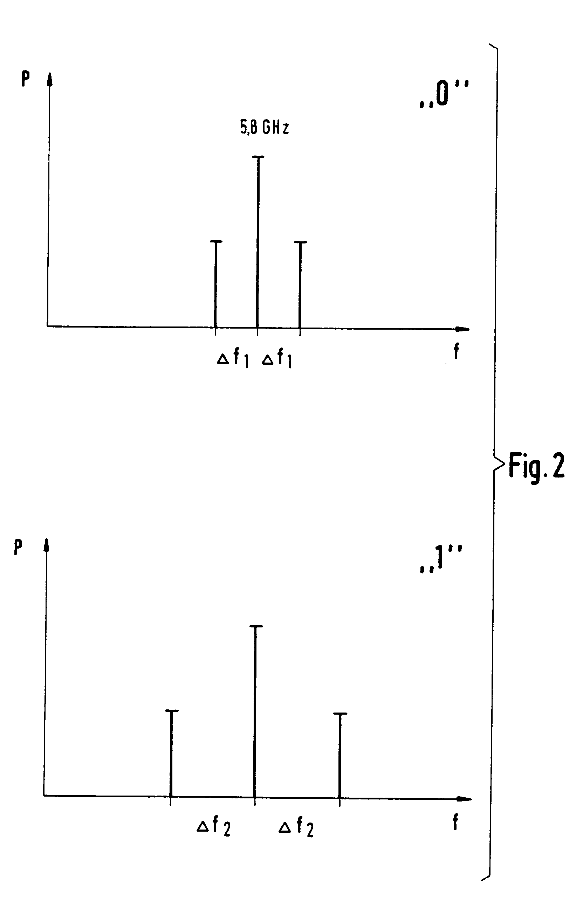

Mit der einfachen Anordnung der Diode 9 im Bordgerät 2 entsteht eine Doppelseitenbandmodulation, wie sie in Figur 2 verdeutlicht ist. Für ein logisches Signal "0" hat das Modulationssignal i(t) beispielsweise eine geringere Frequenz als für logisch "1". In einem realistischen Ausführungsbeispiel entspricht logisch "0" einer Frequenz des Signals i(t) von 1,5 MHz, während "1" einer Frequenz von 2 MHz entspricht.

Demgemäß haben die Seitenbänder, die in Figur 2 dargestellt sind, für logisch "0" und logisch "1" einen unterschiedlichen Abstand zur Trägerfrequenz, nämlich Δf₁ bzw. Δf₂.

Die erfindungsgemäße Doppelseitenbandmodulation führt in der Bake 1 zur Verwendung eines relativ aufwendigen Image Rejection Mixers sowie zur Verwendung getrennter Verarbeitungswege für die beiden Seitenbänder. Dieser erhöhte Aufwand bewirkt allerdings auch eine doppelte Verarbeitung der Datensignale, wodurch eine erhöhte Übertragungssicherheit erzielt wird.

In weiterer Ausgestaltung der Erfindung ist vorgesehen, daß anstelle der Frequenzmodulation auch ein anderes kodierendes Signal, wie beispielsweise eine Pulscodemodulation, verwendet wird.

## Patentansprüche

1. Vorrichtung eines Fahrzeugs zur Datenübertragung auf eine ortsfeste Bake (1), die eine Sende- und Empfangsvorrichtung aufweist, bestehend aus einem Bordgerät (2) mit einer Antenne (6) zum Empfang eines von der Bake (1) ausgesandten kontinuierlichen Signals (5) und zum Zurücksenden des empfangenen Signals (5) nach einer Modulation mit einem Datensignal (i(t)), **dadurch gekennzeichnet, daß** das vom Bordgerät (2) zurückgesandte Signal (7) ein Zweiseitenbandsignal ist.

2. Vorrichtung nach Anspruch 1, dadurch gekennzeichnet, daß eine steuerbare Impedanz (9) am Fußpunkt der Antenne (6) für logisch "0" mit einem ersten kodierenden Signal und für logisch "1" mit einem zweiten kodierenden Signal ansteuerbar ist.

3. Vorrichtung nach Anspruch 2, dadurch gekennzeichnet, daß das erste kodierende Signal ein Signal mit einer ersten Frequenz (f₁) und das zweite kodierende Signal ein Signal mit einer zweiten Frequenz (f₂) ist.

4. Vorrichtung nach Anspruch 2 oder 3, dadurch gekennzeichnet, daß die steuerbare Impedanz eine Diode (9) ist, die durch Impulssignale des kodierenden Signals (i(t)) zwischen dem sperrenden und dem durchgeschalteten Zustand hin- und hergeschaltet wird.

5. Vorrichtung nach einem der Ansprüche 1 bis 4, dadurch gekennzeichnet, daß das Bordgerät (2) zwei räumlich voneinander getrennte Antennen aufweist.

6. Kommunikationssystem mit einer ortsfesten Bake (1), die eine Sende- und Empfangsvorrichtung aufweist, und mit einer Vorrichtung nach einem der Ansprüche 1 bis 5.
